# EUROPEAN PATENT APPLICATION

(11) **EP 4 838 997 A1**
(43) Date of publication of application: **11.11.2026**
(21) Application number: 24933571.2
(22) Date of filing: 05.04.2024
(51) Int. Cl.: H04W 74/0833

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIN, Hao, Dongguan, Guangdong 523860 (CN)
(74) Representative: Penza, Giancarlo
(86) International application number: PCT/CN2024/086253
(87) International publication number: WO 2025/208632

(57) **Abstract**

Provided are a wireless communication method, a terminal device, and a network device. The method comprises: a terminal device receives first configuration information and second configuration information sent by a network device, wherein the first configuration information and the second configuration information are used for PRACH transmission, and the first configuration information is different from the second configuration information. In embodiments of the present application, the network device may send to the terminal device a plurality of pieces of configuration information (e.g., the first configuration information and the second configuration information) used for PRACH transmission. Different configuration information corresponds to different PRACH transmission modes, which helps to improve the flexibility of the terminal device in PRACH transmission.

## Description

### TECHNICAL FIELD

The present application relates to the technical field of communications, and in particular to a wireless communication method, a terminal device and a network device.

### BACKGROUND

In legacy solutions, a network device sends configuration information for physical random access channel (PRACH) transmission to a terminal device. However, this manner of configuring the PRACH transmission is less flexible.

### SUMMARY

The present application provides a method of wireless communication, a terminal device and a network device. Various aspects of the present application will be described below.

In a first aspect, there is provided a method of wireless communication, including that: a terminal device receives first configuration information and second configuration information sent by a network device. The first configuration information and the second configuration information are used for PRACH transmission, and the first configuration information is different from the second configuration information.

In a second aspect, there is provided a method of wireless communication, including that: a network device sends first configuration information and second configuration information to a terminal device. The first configuration information and the second configuration information are used for PRACH transmission, and the first configuration information is different from the second configuration information.

In a third aspect, there is provided a terminal device, including a receiving unit, configured to receive first configuration information and second configuration information sent by a network device. The first configuration information and the second configuration information are used for PRACH transmission, and the first configuration information is different from the second configuration information.

In a fourth aspect, there is provided a network device, including a sending unit, configured to send first configuration information and second configuration information to a terminal device. The first configuration information and the second configuration information are used for PRACH transmission, and the first configuration information is different from the second configuration information.

In a fifth aspect, there is provided a terminal device, including a processor, a memory, and a communication interface. The memory is configured to store one or more computer programs, and the processor is configured to invoke the computer program(s) in the memory, such that the terminal device performs part or all of the operations in the method of the first aspect.

In a sixth aspect, there is provided a network device, including a processor, a memory, and a transceiver. The memory is configured to store one or more computer programs, and the processor is configured to invoke the computer program(s) in the memory, such that the network device performs part or all of the operations in the method of the second aspect.

In a seventh aspect, the embodiments of the present application provide a communication system, including the terminal device and/or the network device as described above. In another possible design, the system may further include other devices that interact with the terminal device or the network device in the solution provided by the embodiments of the present application.

In an eighth aspect, the embodiments of the present application provide a computer-readable storage medium, having stored therein a computer program, which causes a communication device to perform part or all of the operations in the method of various aspect as described above.

In a ninth aspect, the embodiments of the present application provide a computer program product, including a non-transitory computer-readable storage medium for storing a computer program, which is operable to cause a communication device (e.g., the terminal device or the network device) to perform part or all of the operations in the methods of the aforementioned aspects. In some implementations, the computer program product may be a software installation package.

In a tenth aspect, the embodiments of the present application provide a chip including a memory and a processor. The processor may invoke and execute a computer program from the memory to implement part or all of the operations in the methods of various aspects as described above.

In the embodiments of the present application, the network device may send to the terminal device a plurality of configuration information for PRACH transmission (for example, the first configuration information and the second configuration information). Among them, different configuration information corresponds to different PRACH transmission modes, which helps to improve the flexibility of terminal device in PRACH transmission.

### BRIEF DESCRIPTION OF THE DRAWINGS

FIG. 1 is a schematic diagram of a communication system 100 applied in embodiments of the present application.
FIG. 2 is a schematic flowchart of a wireless communication method according to an embodiment of the present application.
FIG. 3 is a schematic diagram of resources for PRACH transmission configured by first configuration information.
FIG. 4 is a schematic diagram of resources for PRACH transmission configured by second configuration information.
FIG. 5 is a schematic diagram showing overlapping resources among resources configured by first configuration information and resources configured by second configuration information.
FIG. 6 is a schematic diagram of valid resources among resources configured by first configuration information and resources configured by second configuration information.
FIG. 7 is a schematic diagram of mapping synchronization signal and physical broadcast channel blocks (SSBs) to resources configured by first configuration information.
FIG. 8 is a schematic diagram of mapping SSBs to resources configured by second configuration information.
FIG. 9 is a schematic diagram of a terminal device according to an embodiment of the present application.
FIG. 10 is a schematic diagram of a network device according to an embodiment of the present application.
FIG. 11 is a schematic structure diagram of a communication apparatus according to an embodiment of the present application.

### DETAILED DESCRIPTION

Hereinafter, technical solutions in the present application will be described with reference to the accompanying drawings.

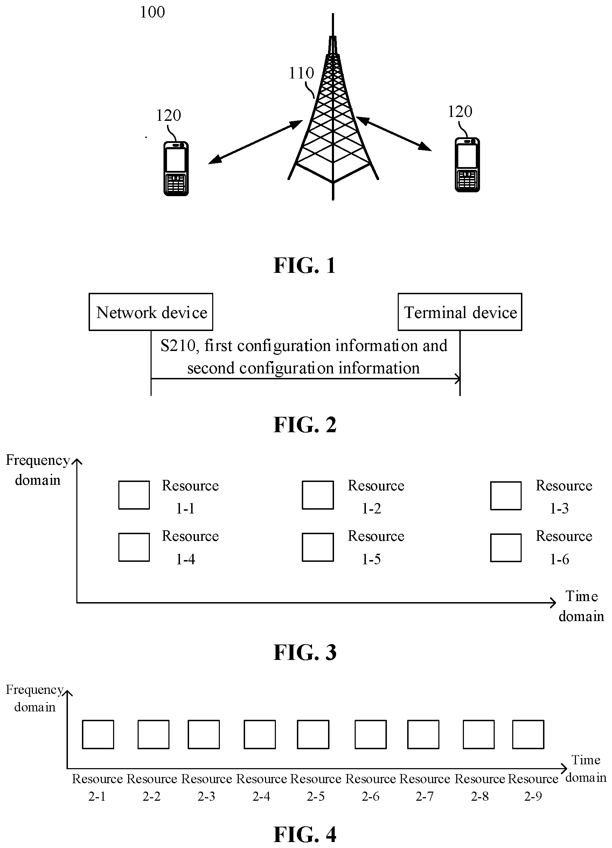

FIG. 1 is a schematic diagram of a communication system 100 applied in embodiments of the present application. The wireless communication system 100 may include a network device 110 and terminal devices 120. The network device 110 may be a device in communication with the terminal devices 120. The network device 110 may provide communication coverage for a particular geographic area and may communicate with the terminal devices 120 located within the coverage area.

FIG. 1 exemplarily illustrates one network device and two terminals. Optionally, the wireless communication system 100 may include multiple network devices, and another number of terminal devices may be included within the coverage of each network device, which is not limited in the embodiments of the present application.

Optionally, the wireless communication system 100 may further include other network entities, such as a network controller and a mobility management entity, which is not limited in the embodiments of the present application.

It should be understood that the technical solutions of the embodiments of the present application may be applied to various communication systems, such as a fifth generation (5G) system or a new radio (NR) system, a long term evolution (LTE) system, an LTE frequency division duplex (FDD) system, an LTE time division duplex (TDD), and the like. The technical solutions provided in the present application may also be applied to future communication systems, such as a sixth generation mobile communication system, a satellite communication system, and the like.

The terminal device in the embodiments of the present application may be referred to as user equipment (UE), an access terminal, a subscriber unit, a subscriber station, a mobile platform, a mobile station (MS), a mobile Terminal (MT), a remote station, a remote terminal, a mobile device, a user terminal, a terminal, a wireless communication device, a user agent, or a user device, and the like. In the embodiments of the present application, the terminal device may be a device that provides voice and/or data connectivity to a user and may be used to connect people, objects, and machines, for example, a handheld device having a wireless connection function, a vehicle-mounted device, or the like. The terminal device in the embodiments of the present application may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, UE may be used to act as a base station. For example, the UE may act as a scheduling entity that provides sidelink signals between UEs in V2X or D2D, etc. For example, cellular telephones and cars communicate with each other using sidelink signals. Cellular phones and intelligent home devices perform communication without the need of relaying communication signals via a base station.

The network device in the embodiments of the present application may be a device that communicates with terminal devices, and the network device may also be referred to as an access network device or a radio access network device. For example, the network device may be a base station. The network device in the embodiments of the present application may be referred to as a radio access network (RAN) node (or device) that connects the terminal devices to the wireless network. The base station may broadly encompass or be interchanged with the following various names, such as a NodeB, an evolved NodeB (eNB), a next generation NodeB (gNB), a relay station, a transmitting and receiving point (TRP), a transmitting point (TP), a master station (MeNB), a secondary station (SeNB), a multi-standard radio (MSR) node, a home base station, a network controller, an access point (AP), a transmission node, a transceiver node, a base band unit (BBU), a remote radio unit (RRU), an active antenna unit (AAU), a remote radio head (RRH), a central unit (CU), a distributed unit (DU), a location node, and the like. The base station may be a macro base station, a micro base station, a relay node, a donor node, or the like, or a combination thereof. The base station may also be referred to as a communication module, a modem, or a chip that is disposed within the aforementioned devices or apparatuses. The base station may also be a mobile switching center, as well as a device that undergoes base station functions in D2D communication, vehicle-to-everything (V2X) communication, machine-to-Machine (M2M) communication, a network-side device in 6G network, a device that undergoes base station functions in a future communication system, or the like. The base station may support networks of the same or different access technologies. The embodiments of the present application do not limit the specific technology and the specific device form adopted by the network device.

The base station may be fixed or mobile. For example, a helicopter or drone may be configured to act as a mobile base station, and one or more cells may move according to the location of the mobile base station. In other examples, a helicopter or drone may be configured to act as a device communicating with another base station.

In some deployments, the network device in the embodiments of the present application may be referred to as a CU or a DU, or the network device includes a CU and a DU. The gNB may also include an AAU.

The network device and terminal devices may be deployed on land, including indoor or outdoor, handheld, wearable, or vehicle-mounted, or may also be deployed on the water, or deployed on aircraft, balloons and satellites in the air. The scenario in which the network device and the terminal devices are located is not limited in the embodiments of the present application.

It should be understood that all or part of the functions of the communication device in the present application may also be implemented by software functions running on hardware, or by virtualized functions instantiated on a platform (e.g., a cloud platform).

In conventional solutions, a network device sends configuration information for PRACH transmission to a terminal device. However, this manner of configuring PRACH transmission is less flexible.

Therefore, in view of the above problems, embodiments of the present application provide a method of wireless communication in which a network device may send multiple configuration information for PRACH transmission to a terminal device. Herein, different configuration information correspond to different PRACH transmission modes, which helps to improve the flexibility of terminal devices in PRACH transmission. Hereinafter, by taking an example where multiple pieces of configuration information include first configuration information and second configuration information, a wireless communication method according to an embodiment of the present application will be described with reference to FIG. 2. The method illustrated in FIG. 2 may include operation S210.

In S210, a network device sends first configuration information and second configuration information to a terminal device, where the first configuration information and the second configuration information are used for PRACH transmission.

In some implementations, the first configuration information and the second configuration information may be determined based on a radio resource control (RRC) signaling. For example, the network device may use different RRC configuration information element (IE) names to denote the first configuration information and the second configuration information. Of course, in the embodiments of the present application, the network device may use a dedicated parameter to indicate which one is the first configuration information and which one is the second configuration information.

The transmission mode of the first configuration information and the second configuration information is not limited in the embodiments of the preset application. In some implementations, the first configuration information and the second configuration information may be transmitted through two separate pieces of information. In other implementations, the first configuration information and the second configuration information may be transmitted together.

In some scenarios, the first configuration information and the second configuration information being used for PRACH transmission may include that: the first configuration information and the second configuration information are used for configuring resources for PRACH transmission. In some scenarios, the resources for the PRACH transmission may also be referred to as PRACH occasions.

In some implementations, the first configuration information is different from the second configuration information. For example, part of parameters in the first configuration information have different values from part of parameters in the second configuration information are different. For another example, all of the parameters in the first configuration information have different values from all of the parameters in the second configuration information.

The parameters carried in the first configuration information and/or the second configuration information are not limited in the embodiments of the present application. In some implementations, the first configuration information and/or the second configuration information may include one or more of the following information: PRACH period, PRACH frame, PRACH subframe, PRACH slot, PRACH occasion location within PRACH slot, PRACH occasion number within PRACH slot, PRACH occasion duration, PRACH occasion number multiplexed in frequency domain, a number of SSBs per PRACH occasion, or a number of PRACH occasions per SSB.

In some implementations, power consumption of the network device corresponding to the first configuration information and the second configuration information are different. That is, the power consumption required by the network device to receive a PRACH sent by the terminal device based on the first configuration information is different from the power consumption required by the network device to receive the PRACH sent by the terminal device based on the second configuration information. For example, the power consumption required by the network device to receive the PRACH sent by the terminal device based on the first configuration information is smaller than the power y consumption required by the network device to receive the PRACH sent by the terminal device based on the second configuration information.

In some implementations, the power consumption required by the network device to receive the PRACH may be associated with the sparsity level of resources for PRACH transmission. For example, when the distribution of the resources for PRACH transmission is sparser, the power consumption required by the network device to receive the PRACH is lower. That is, assuming that the network device may be in a low power consumption state (e.g., a sleep state) during the time corresponding to resources not used for PRACH transmission, then when the distribution of the resources for PRACH transmission is sparser, it means that the time interval between wake-ups of the network device to receive PRACH, and correspondingly, the power consumption required by the network device to receive the PRACH is lower.

For another example, when the distribution of the resources for PRACH transmission is denser, the power consumption required by the network device to receive the PRACH is larger. That is, assuming that the network device may be in a low power consumption state (for example, a sleep state) during a time corresponding to resources not used for PRACH transmission, then when the distribution of the resources for PRACH transmission is denser, it means that the time interval between wake-ups of the network device to receive PRACH, and correspondingly, the power consumption required by the network device to receive PRACH is larger.

In the embodiments of the present application, different values may be set for part of parameters in the first configuration information and part of the parameters in the second configuration information, to realize that resources for the PRACH transmission configured by different configurations correspond to different power consumptions of the network device.

For example, multiple resources for the PRACH transmission configured by the first configuration information correspond to a first time domain interval, and multiple resources for the PRACH transmission configured by the second configuration information correspond to a second time domain interval, where the first time domain interval is larger than the second time domain interval.

For another example, the number of PRACH occasions in a PRACH slot configured by the first configuration information is N1, and the number of PRACH occasions in a PRACH slot configured by the second configuration information is N2, where N1 is smaller than N2, and N1 and N2 are positive integers greater than 0.

For another example, the PRACH period configured by the first configuration information is T1, and the PRACH period configured by the second configuration information is T2, where T1 is greater than T2, and T1 and T2 are positive integers greater than 0.

In some implementations, the resources for the PRACH transmission configured by the first configuration information are partially or wholly overlapped with the resources for the PRACH transmission configured by the second configuration information.

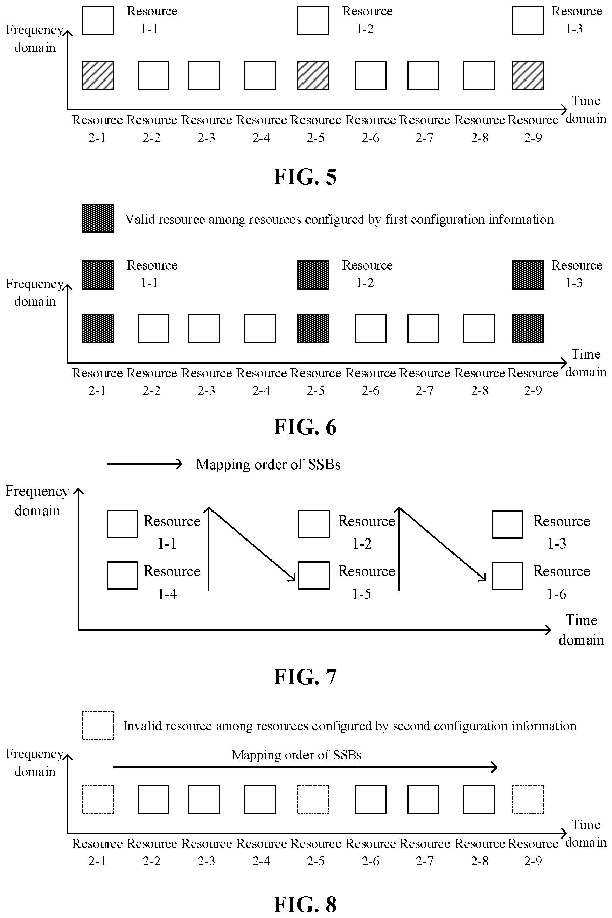

For ease of understanding, the resources for the PRACH transmission configured by the first configuration information and the resources for the PRACH transmission configured by the second configuration information in the embodiments of the present application will be described below with reference to FIGS. 3 to 5. As illustrated in FIG. 3, the resources for the PRACH transmission configured by the first configuration information include resources 1-1 to 1-6. As illustrated in FIG. 4, the resources for the PRACH transmission configured by the second configuration information include resources 2-1 to 2-10. As illustrated in FIG. 5, resource 1-4 is overlapped with resource 2-1, resource 1-5 is overlapped with resource 2-5, and resource 1-6 is overlapped with resource 2-9.

In some implementations, the resources for the PRACH transmission configured by the second configuration information include a first type of resources that are not overlapped with the resources for the PRACH transmission configured by the first configuration information. The first type of resources are used for mapping synchronization signal blocks (SSBs), and/or the first type of resources are valid among the resources configured by the second configuration information.

In some implementations, the first type of resources being valid among the resources configured by the second configuration information may be understood as that: the first type of resources among the resources configured by the second configuration information may be used for PRACH transmission, and/or the first type of resources among the resources configured by the second configuration information may be used to mapping SSBs.

With continued reference to FIG. 5, the first type of resources may include resources 2-2 to 2-4 and resources 2-6 to 2-8.

In some implementations, the resources for the PRACH transmission configured by the first configuration information include a target resource, and the resources for the PRACH transmission configured by the second configuration information include the target resource. The target resource is invalid among the resources configured by the second configuration information; and/or the target resource is not used for mapping SSBs among the resources configured by the second configuration information.

In some implementations, the target resource being invalid among the resources configured by the second configuration information may be understood as that: the target resource is not used to for PRACH transmission among the resources configured by the second configuration information, and/or the target resource is not used for mapping SSBs among the resources configured by the second configuration information.

With continued reference to FIG. 5, the target resource may include resource 2-1, resource 2-5, and resource 2-9. It is to be noted that although the target resource is invalid among the resources configured by the second configuration information, the above information is valid among the resources configured by the first configuration information (see FIG. 6).

The manner of mapping SSBs is not limited in the embodiments of the present application. In some implementations, among the multiple resources configured by the first configuration information, the mapping SSBs may be performed sequentially in frequency domain first and then in time domain. As illustrated in FIG. 7, SSBs may be sequentially mapped to resources 1-4, resource 1-1, resource 1-5, resource 1-2, resource 1-6, and resource 1-3 according to an order of SSB indexes from small to large. In other implementations, among the multiple resources configured by the second configuration information, the mapping SSBs may be performed sequentially from earliest to latest in time domain. As illustrated in FIG. 8, SSBs may be mapped to resource 2-2, resource 2-3, resource 2-4, resource 2-6, resource 2-7, and resource 2-8 according to an order from small to large.

In some implementations, whether resources are valid or not may be determined based on priorities of configuration information. For example, if the priority of the first configuration information is higher than the priority of the second configuration information, a overlapping resource(s) is valid among the resources configured by the first configuration information, and the overlapping resource(s) is invalid among the resources configured by the second configuration information.

In some implementations, the priority of the first configuration information and the priority of the second configuration information are determined based on first indication information sent by the network device. In the embodiments of the present application, the priority of the first configuration information and the priority of the second configuration information may be determined based on predefined information and/or pre-configured information. For example, the predefined information and/or the preconfigured information may indicate that the priority of the first configuration information corresponding to a lower power consumption of the network device is higher.

In some implementations, the terminal device performs the PRACH transmission based on the first configuration information or the second configuration information, which is determined based on second indication information sent by the network device or the predefined information. Alternatively, whether the terminal device selects the first configuration information or the second configuration information to perform the PRACH transmission is determined based on the second indication information sent by the network device or the predefined information. In the embodiments of the present application, the terminal device may always select the first configuration information for performing the PRACH transmission, or the terminal device may always select the second configuration information for performing the PRACH transmission.

In some implementations, for PRACH transmission triggered by PDCCH order or higher layer, when a terminal device receives an indication of a PRACH occasion index sent by a network device, the terminal device may autonomously determine either to determine a PRACH occasion within valid resources corresponding to the first configuration information according to the indicated PRACH occasion index, or to determine a PRACH occasion within valid resources corresponding to the second configuration information according to the indicated PRACH occasion index.

In some implementations, for PRACH transmission triggered by PDCCH order or higher layer, when the terminal device receives an indication of a PRACH occasion index sent by a network device, the terminal device may determine, according to the second indication information, either to determine a PRACH occasion within valid resources corresponding to the first configuration information according to the indicated PRACH occasion indexes, or to determine a PRACH occasion in valid PRACH resources corresponding to the second configuration information. The second indication information may be carried in one or more of the following: RRC information; DCI; or MAC-CE. When the second indication information is carried in DCI, the DCI may be a DCI that triggers the above PDCCH order, or a group-common DCI.

In some implementations, for PRACH transmission triggered by PDCCH order or higher layer, when a terminal device receives an indication of a PRACH occasion index sent by a network device, if a next valid mapping cycle in first resources configured by the first configuration information is earlier than the next valid mapping cycle in second resources configured by the second configuration information, then the terminal device determines a PRACH occasion based on the next valid mapping cycle in the first resources configured by the first configuration information. Conversely, if the next valid mapping cycle in the first resources configured by the first configuration information is later than the next valid mapping cycle in the second resources configured by the second configuration information, the terminal device determines the PRACH occasion based on the next valid mapping cycle in the second resources configured by the second configuration information.

It is to be noted that the next valid mapping cycle described above may be understood as the first valid mapping cycle after a time domain resource corresponding to the trigger indication (e.g., PDCCH order or higher-layer command) for the triggered PRACH transmission.

In some implementations, if a time domain position of an initial first resource among the first resources configured by the first configuration information is earlier than a time domain position of an initial second resource among the second resources configured by the second configuration information, the terminal device performs the PRACH transmission based on the first configuration information, which helps to expediting the PRACH transmission.

In other implementations, if the time domain position of the initial first resource among the first resources configured by the first configuration information is later than the time domain position of the initial second resource among the second resources configured by the second configuration information, the terminal device performs the PRACH transmission based on the second configuration information.

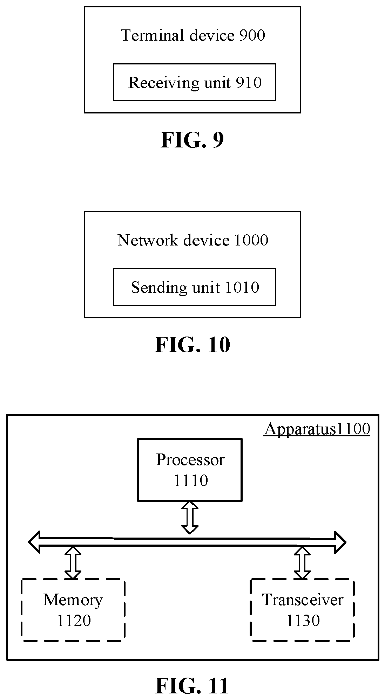

The above has described the method embodiments of the present application in detail with reference to FIGS. 1 to 8, and the following will describe the apparatus embodiments of the present application in detail with reference to FIGS. 9 to 11. It should be understood that the descriptions of the method embodiments and the descriptions of the device embodiment correspond to each other, and thus portions not described in detail may be referred to the foregoing method embodiments.

FIG. 9 is a schematic diagram of a terminal device according to an embodiment of the present application. The terminal device 900 of FIG. 9 includes a receiving module 910.

The receiving unit 910 is configured to receive first configuration information and second configuration information sent by a network device, where the first configuration information and the second configuration information are used for PRACH transmission, and the first configuration information is different from the second configuration information.

In some implementations, multiple resources for the PRACH transmission configured by the first configuration information correspond to a first time domain interval, and multiple resources for the PRACH transmission configured by the second configuration information correspond to a second time domain interval, where the first time domain interval is larger than the second time domain interval.

In some implementations, the resources for the PRACH transmission configured by the first configuration information are partially or wholly overlapped with the resources for the PRACH transmission configured by the second configuration information.

In some implementations, the resources for the PRACH transmission configured by the second configuration information include a first type of resources, and the first type of resources are not overlapped with the resources for the PRACH transmission configured by the first configuration information. Herein, the first type of resources are used for mapping SSBs, and/or the first type of resources are valid among the resources configured by the second configuration information.

In some implementations, the resources for the PRACH transmission configured by the first configuration information include a target resource, and the resources for the PRACH transmission configured by the second configuration information include the target resource. The target resource is invalid among the resources configured by the second configuration information; and/or the target resource is not used for mapping SSBs among the resources configured by the second configuration information.

In some implementations, a priority of the first configuration information is higher than a priority of the second configuration information.

In some implementations, the priority of the first configuration information and the priority of the second configuration information are determined based on first indication information sent by the network device.

In some implementations, the terminal device performs the PRACH transmission based on the first configuration information or the second configuration information, which is determined based on second indication information sent by the network device or predefined information.

In some implementations, if a time domain position of an initial first resource among the first resources configured by the first configuration information is earlier than a time domain position of an initial second resource among the second resources configured by the second configuration information, the terminal device performs the PRACH transmission based on the first configuration information. Or, if a time domain position of an initial first resource among the first resources configured by the first configuration information is later than a time domain position of an initial second resource among the second resources configured by the second configuration information, the terminal device performs the PRACH transmission based on the second configuration information.

FIG. 10 is a schematic diagram of a network device according to an embodiment of the present application. The network device 1000 of FIG. 10 includes a sending unit 1010.

The sending unit 1010 is configured to send first configuration information and second configuration information to the terminal device, where the first configuration information and the second configuration information are used for PRACH transmission, and the first configuration information is different from the second configuration information.

In some implementations, multiple resources for the PRACH transmission configured by the first configuration information correspond to a first time domain interval, and multiple resources for the PRACH transmission configured by the second configuration information correspond to a second time domain interval, where the first time domain interval is larger than the second time domain interval.

In some implementations, resources for the PRACH transmission configured by the first configuration information are partially or wholly overlapped with resources for the PRACH transmission configured by the second configuration information.

In some implementations, the resources for the PRACH transmission configured by the second configuration information include a first type of resources, and the first type of resources are not overlapped with the resources for the PRACH transmission configured by the first configuration information. Herein, the first type of resources are used for mapping SSBs, and/or the first type of resources are valid among the resources configured by the second configuration information.

In some implementations, the resources for the PRACH transmission configured by the first configuration information include a target resource, and the resources for the PRACH transmission configured by the second configuration information include the target resource. The target resource is invalid among the resources configured by the second configuration information; and/or the target resource is not used for mapping SSBs among the resources configured by the second configuration information.

In some implementations, a priority of the first configuration information is higher than a priority of the second configuration information.

In some implementations, the priority of the first configuration information and the priority of the second configuration information are determined based on first indication information sent by the network device.

In some implementations, the terminal device performs the PRACH transmission based on the first configuration information or the second configuration information, which is determined based on second indication information sent by the network device or predefined information.

In some implementations, if a time domain position of an initial first resource among first resources configured by the first configuration information is earlier than a time domain position of an initial second resource among second resources configured by the second configuration information, the terminal device performs the PRACH transmission based on the first configuration information. Or, if a time domain position of an initial first resource among the first resources configured by the first configuration information is later than a time domain position of an initial second resource among the second resources configured by the second configuration information, the terminal device performs the PRACH transmission based on the second configuration information.

In an alternative embodiment, the receiving unit 910 may be a transceiver 1130. The terminal device 900 may further include a processor 1110 and a memory 1120, specifically as illustrated in FIG. 11.

In an alternative embodiment, the sending unit 1010 may be a transceiver 1130. The network device 1010 may further include a processor 1110 and a memory 1120, specifically as illustrated in FIG. 11.

FIG. 11 is a schematic structure diagram of a communication apparatus according to an embodiment of the present application. The dashed lines in FIG. 11 indicate that the units or modules are optional. The apparatus 1100 may be used to implement the method described in the above method embodiments. The apparatus 1100 may be a chip, a terminal device, or a network device.

The apparatus 1100 may include one or more processors 1110. The processor 1110 may support the apparatus 1100 to implement the method as described in the above method embodiments. The processor 1110 may be a general-purpose processor or a dedicated processor. For example, the processor may be a central processing unit (CPU). Or, the processor may also be another general purpose processor, a digital signal processor (DSP), an application specific integrated circuit (ASIC), a field programmable gate array (FPGA) or other programmable logic devices, discrete gates or transistor logic devices, or discrete hardware components. The general purpose processor may be a microprocessor or any conventional processor.

The apparatus 1100 may include one or more memories 1120. The memory 1120 stores a program, which may be executed by the processor 1110 to cause the processor 1110 to perform the method as described in the above method embodiments. The memory 1120 may be independent of the processor 1110 or may be integrated in the processor 1110.

The apparatus 1100 may include a transceiver 1130. The processor 1110 may communicate with other devices or chips through the transceiver 1130. For example, the processor 1110 may transmit and receive data with other devices or chips through the transceiver 1130.

In an embodiment of the present application, there is further provided a computer-readable storage medium for storing a program. The computer-readable storage medium may be applied to the terminal device or the network device provided by the embodiments of the present application, and the program causes a computer to execute the method performed by the terminal device or the network device in various embodiments of the present application.

In an embodiment of the present application, there is further provided a computer program product. The computer program product includes a program. The computer program product may be applied to the terminal device or the network device provided by the embodiments of the present application, and the program causes a computer to execute the method performed by the terminal device or the network device in various embodiments of the present application.

In an embodiment of the present application, there is further provided a computer program. The computer program may be applied to the terminal device or the network device provided by the embodiments of the present application, and the computer program causes a computer to execute the method performed by the terminal device or the network device in various embodiments of the present application.

It is to be understood that the terms "system" and "network" herein may be used interchangeably. In addition, the terms used in the present application are for explanation of specific embodiments of the present application only, and are not intended to limit the present application. The terms "first", "second", "third", and "fourth", etc. in the specification, in claims of the present application, and in the accompanying drawings are used to distinguish different objects, and are not used to describe a specific order. Furthermore, the terms "comprise/include" and "have" and any variations thereof are intended to cover non-exclusive inclusions.

The "indication" mentioned in the embodiments of the present application may be a direct indication or an indirect indication, or may represent an associated relationship. For example, A indicating B may mean that A directly indicates B, for example, B may be acquired by A. It may also mean that A indicates B indirectly, for example A indicates C, and B may be acquired by C. It may also mean that there is an association relationship between A and B.

In the embodiments of the present application, "B corresponding to A" means that B is associated with A, or B may be determined from A. However, it should also be understood that determining B from A does not mean that B is determined from A alone, and it may also mean that B may also be determined from A and/or other information.

In the embodiments of the present application, the term "correspond" may indicate that there is a direct or indirect correspondence between two objects, or indicate that there is a correlation relationship between the two, or indicate a relationship between indicating and being indicated, configuring and being configured, or the like.

In the embodiments of the present application, the "predefined" or "pre-configured" may be implemented by pre-storing corresponding codes, tables, or other manners that may be used to indicate relevant information in devices (e.g., including terminal device and network device), the specific implementation of which is not limited by the present application. For example, predefined may refer to what is defined in the protocol.

In the embodiments of the present application, the "protocol" may refer to a standard protocol in communication field, including, for example, an LTE protocol, an NR protocol, and related protocols applied in future communication systems, which are not limited in the present application.

In the embodiments of the present application, the term "and/or" is merely an association relationship for describing related objects, representing that there may be three kinds of relationships. For example, A and/or B may represent the following three situations: i.e., independent existence of A, existence of both A and B, and independent existence of B. In addition, the character "/" in the present application generally represents that an "or" relationship is formed between the previous and next associated objects.

In various embodiments of the present application, the size of the sequence number of the above-described processes does not mean an order of execution. The order of execution of various processes should be determined by their functions and internal logics, and should not constitute any limitation on the implementation of the embodiments of the present application.

In several embodiments provided herein, it is to be understood that the disclosed systems, apparatuses and methods may be implemented in other manners. For example, the above-described embodiments of the apparatus are only schematic, for example, the division of the units is only a logical function division, and in practice, there may be another division manner, for example, multiple units or components may be combined or integrated into another system, or some features may be ignored or not performed. In addition, the coupling or direct coupling or communication connection between each other illustrated or discussed may be indirect coupling or communication connection via some interfaces, devices or units, and may be electrical, mechanical or other form.

The units illustrated as separate elements may or may not be physically separated, and the elements displayed as units may or may not be physical units, i.e. may be located in a place, or may be distributed over multiple network units. Part or all of the units may be selected according to actual needs to achieve the purpose of the solutions in the embodiments of the present application.

In addition, various functional units in various embodiments of the present application may be integrated in one processing unit, each unit may exist physically alone, or two or more units may be integrated in one unit.

The above embodiments may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions described in accordance with the embodiments of the present application are generated in whole or in part. The computer may be a general purpose computer, a dedicated computer, a computer network, or other programmable devices. The computer instructions may be stored in a computer-readable storage medium or transmitted from a computer readable storage medium to another one. For example, the computer instructions may be transmitted from one website, computer, server or data center by wired (e.g. coaxial cable, optical fiber, digital subscriber line (DSL)) or wireless (e.g. infrared, wireless, microwave, etc.) means to another website, computer, server or data center. The computer-readable storage medium may be any available medium that can be read by a computer, or a data storage device including a server, a data center, or the like that encompasses one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is only the specific implementation of the present application, but the scope of protection of the present application is not limited thereto. Any person skilled in the art may easily think of changes or substitutions within the technical scope disclosed in the present application, which is to be covered within the protection scope of the present application. Therefore, the scope of protection of the present application shall be subject to the scope of protection of the claims.

## Claims

1. A method of wireless communication, comprising:
receiving, by a terminal device, first configuration information and second configuration information sent by a network device,
wherein the first configuration information and the second configuration information are used for physical random access channel (PRACH) transmission, and the first configuration information is different from the second configuration information.

2. The method of claim 1, wherein a plurality of resources for the PRACH transmission configured by the first configuration information correspond to a first time domain interval, and a plurality of resources for the PRACH transmission configured by the second configuration information correspond to a second time domain interval, wherein the first time domain interval is larger than the second time domain interval.

3. The method of claim 1 or 2, wherein resources for the PRACH transmission configured by the first configuration information are partially or wholly overlapped with resources for the PRACH transmission configured by the second configuration information.

4. The method of claim 3, wherein the resources for the PRACH transmission configured by the second configuration information comprise a first type of resources, and the first type of resources are not overlapped with the resources for the PRACH transmission configured by the first configuration information,
wherein the first type of resources are used for mapping synchronization signal blocks (SSBs), and/or the first type of resources are valid among the resources configured by the second configuration information.

5. The method of claim 3 or 4, wherein the resources for the PRACH transmission configured by the first configuration information comprise a target resource, and the resources for the PRACH transmission configured by the second configuration information comprise the target resource,
wherein the target resource is invalid among the resources configured by the second configuration information; and/or
the target resource is not used for mapping SSBs among the resources configured by the second configuration information.

6. The method of any one of claims 1 to 5, wherein a priority of the first configuration information is higher than a priority of the second configuration information.

7. The method of any one of claims 1 to 6, wherein a priority of the first configuration information and a priority of the second configuration information are determined based on first indication information sent by the network device.

8. The method of any one of claims 1 to 7, wherein the terminal device performs the PRACH transmission based on the first configuration information or the second configuration information, which is determined based on predefined information, or second indication information sent by the network device.

9. The method of any one of claims 1 to 8, wherein if a time domain position of an initial first resource among first resources configured by the first configuration information is earlier than a time domain position of an initial second resource among second resources configured by the second configuration information, the terminal device performs the PRACH transmission based on the first configuration information; or
if a time domain position of an initial first resource among first resources configured by the first configuration information is later than a time domain position of an initial second resource among second resources configured by the second configuration information, the terminal device performs the PRACH transmission based on the second configuration information.

10. A method of wireless communication, comprising:
sending, by a network device, first configuration information and second configuration information to a terminal device,
wherein the first configuration information and the second configuration information are used for physical random access channel (PRACH) transmission, and the first configuration information is different from the second configuration information.

11. The method of claim 10, wherein a plurality of resources for the PRACH transmission configured by the first configuration information correspond to a first time domain interval, and a plurality of resources for the PRACH transmission configured by the second configuration information correspond to a second time domain interval, wherein the first time domain interval is larger than the second time domain interval.

12. The method of claim 10 or 11, wherein resources for the PRACH transmission configured by the first configuration information are partially or wholly overlapped with the resources for the PRACH transmission configured by the second configuration information.

13. The method of claim 12, wherein the resources for the PRACH transmission configured by the second configuration information comprise a first type of resources, and the first type of resources are not overlapped with the resources for the PRACH transmission configured by the first configuration information,
wherein the first type of resources are used for mapping synchronization signal blocks (SSBs), and/or the first type of resources are valid among the resources configured by the second configuration information.

14. The method of claim 12 or 13, wherein the resources for the PRACH transmission configured by the first configuration information comprise a target resource, and the resources for the PRACH transmission configured by the second configuration information comprise the target resource,
wherein the target resource is invalid among the resources configured by the second configuration information; and/or
the target resource is not used for mapping SSBs among the resources configured by the second configuration information.

15. The method of any one of claims 10 to 14, wherein a priority of the first configuration information is higher than a priority of the second configuration information.

16. The method of any one of claims 10 to 15, wherein a priority of the first configuration information and a priority of the second configuration information are determined based on first indication information sent by the network device.

17. The method of any one of claims 10 to 16, wherein the terminal device performs the PRACH transmission based on the first configuration information or the second configuration information, which is determined based on predefined information, or second indication information sent by the network device.

18. The method of any one of claims 10 to 17, wherein if a time domain position of an initial first resource among first resources configured by the first configuration information is earlier than a time domain position of an initial second resource among second resources configured by the second configuration information, the terminal device performs the PRACH transmission based on the first configuration information; or
if a time domain position of an initial first resource among first resources configured by the first configuration information is later than a time domain position of an initial second resource among second resources configured by the second configuration information, the terminal device performs the PRACH transmission based on the second configuration information.

19. A terminal device, comprising:
a receiving unit, configured to receive first configuration information and second configuration information sent by a network device,
wherein the first configuration information and the second configuration information are used for physical random access channel (PRACH) transmission, and the first configuration information is different from the second configuration information.

20. The terminal device of claim 19, wherein a plurality of resources for the PRACH transmission configured by the first configuration information correspond to a first time domain interval, and a plurality of resources for the PRACH transmission configured by the second configuration information correspond to a second time domain interval, wherein the first time domain interval is larger than the second time domain interval.

21. The terminal device of claim 19 or 20, wherein resources for the PRACH transmission configured by the first configuration information are partially or wholly overlapped with the resources for the PRACH transmission configured by the second configuration information.

22. The terminal device of claim 21, wherein the resources for the PRACH transmission configured by the second configuration information comprise a first type of resources, and the first type of resources are not overlapped with the resources for the PRACH transmission configured by the first configuration information,
wherein the first type of resources are used for mapping synchronization signal blocks (SSBs), and/or the first type of resources are valid among the resources configured by the second configuration information.

23. The terminal device of claim 21 or 22, wherein the resources for the PRACH transmission configured by the first configuration information comprise a target resource, and the resources for the PRACH transmission configured by the second configuration information comprise the target resource,
wherein the target resource is invalid among the resources configured by the second configuration information; and/or
the target resource is not used for mapping SSBs among the resources configured by the second configuration information.

24. The terminal device of any one of claims 19 to 23, wherein a priority of the first configuration information is higher than a priority of the second configuration information.

25. The terminal device of any one of claims 19 to 24, wherein a priority of the first configuration information and a priority of the second configuration information are determined based on first indication information sent by the network device.

26. The terminal device of any one of claims 19 to 25, wherein the terminal device performs the PRACH transmission based on the first configuration information or the second configuration information, which is determined based on predefined information or second indication information sent by the network device.

27. The terminal device of any one of claims 19 to 26, wherein if a time domain position of an initial first resource among first resources configured by the first configuration information is earlier than a time domain position of an initial second resource among second resources configured by the second configuration information, the terminal device performs the PRACH transmission based on the first configuration information; or
if a time domain position of an initial first resource among first resources configured by the first configuration information is later than a time domain position of an initial second resource among second resources configured by the second configuration information, the terminal device performs the PRACH transmission based on the second configuration information.

28. A network device, comprising:
a sending unit, configured to send first configuration information and second configuration information to a terminal device,
wherein the first configuration information and the second configuration information are used for physical random access channel (PRACH) transmission, and the first configuration information is different from the second configuration information.

29. The network device of claim 28, wherein a plurality of resources for the PRACH transmission configured by the first configuration information correspond to a first time domain interval, and a plurality of resources for the PRACH transmission configured by the second configuration information correspond to a second time domain interval, wherein the first time domain interval is larger than the second time domain interval.

30. The network device of claim 28 or 29, wherein resources for the PRACH transmission configured by the first configuration information are partially or wholly overlapped with resources for the PRACH transmission configured by the second configuration information.

31. The network device of claim 30, wherein the resources for the PRACH transmission configured by the second configuration information comprise a first type of resources, and the first type of resources are not overlapped with the resources for the PRACH transmission configured by the first configuration information,
wherein the first type of resources are used for mapping synchronization signal blocks (SSBs), and/or the first type of resources are valid among the resources configured by the second configuration information.

32. The network device of claim 30 or 31, wherein the resources for the PRACH transmission configured by the first configuration information comprise a target resource, and the resources for the PRACH transmission configured by the second configuration information comprise the target resource,
wherein the target resource is invalid among the resources configured by the second configuration information; and/or
the target resource is not used for mapping SSBs among the resources configured by the second configuration information.

33. The network device of any one of claims 28 to 32, wherein a priority of the first configuration information is higher than a priority of the second configuration information.

34. The network device of any one of claims 28 to 33, wherein a priority of the first configuration information and a priority of the second configuration information are determined based on first indication information sent by the network device.

35. The network device of any one of claims 28 to 34, wherein the terminal device performs the PRACH transmission based on the first configuration information or the second configuration information, which is determined based on predefined information, or second indication information sent by the network device.

36. The network device of any one of claims 28 to 35, wherein if a time domain position of an initial first resource among first resources configured by the first configuration information is earlier than a time domain position of an initial second resource among second resources configured by the second configuration information, the terminal device performs the PRACH transmission based on the first configuration information; or
if a time domain position of an initial first resource among first resources configured by the first configuration information is later than a time domain position of an initial second resource among second resources configured by the second configuration information, the terminal device performs the PRACH transmission based on the second configuration information.

37. A terminal device, comprising a transceiver, a memory, and a processor, wherein the memory is used for storing a program, and the processor is configured to invoke the program in the memory and control the transceiver to receive or send signals, to cause the terminal device to perform the method of any one of claims 1 to 9.

38. A network device, comprising a transceiver, a memory, and a processor, wherein the memory is used for storing a program, and the processor is configured to invoke the program in the memory and control the transceiver to receive or send signals, to cause the network device to perform the method of any one of claims 10 to 18.

39. An apparatus, comprising a processor configured to invoke a program from a memory to cause the apparatus to perform the method of any one of claims 1 to 18.

40. A chip, comprising a processor configured to invoke a program from a memory, to cause a device on which the chip is mounted to perform the method of any one of claims 1 to 18.

41. A computer readable storage medium, having stored thereon a program, which causes a computer to perform the method of any one of claims 1 to 18.

42. A computer program product comprising a program, which causes a computer to perform the method of any one of claims 1 to 18.

43. A computer program, which cause a computer to perform the method of any one of claims 1 to 18.
